# EUROPEAN PATENT APPLICATION

(11) **EP 0 556 793 A2**
(43) Date of publication of application: **25.08.1993**
(21) Application number: 93102460.8
(22) Date of filing: 17.02.1993
(51) Int. Cl.: C09D 175/04, C08G 18/76

(54) **A two-component polyurethane paint, particularly for coating metal sheets which are to be cold drawn**

(30) Priority: 19.02.1992 IT TO920134
(71) Applicant: FIAT AUTO S.p.A., I-10135 Torino (IT)
(72) Inventor: Da'Re, Mario, I-10128 Torino (IT)
(74) Representative: Gerbino, Angelo

(57) **Abstract**

The two-component paint is formed as a result of the reaction between a first component containing -NCO groups and a second component containing -OH groups, the ratio between the -NCO groups of the first component and the -OH groups of the second component being of between 0.5 and 2. The first component is an isocyanate and the second component is a polyol.

## Description

The present invention relates to a two-component polyurethane paint which is formed as a result of the reaction between a first component containing -NCO groups and a second component containing -OH groups.

Paints of this type have been used for prepainting metal sheets which are subsequently to be subjected to cold drawing.

The drawing process, however, usually causes cracks to form in the already-polymerised film of paint which has been applied to the sheet metal. This problem occurs particularly during the production of items which have deeply recessed portions with small radii of curvature, as is the case, for example, in certain panels for motor vehicles.

The formation of the cracks is thought to be due to the inability of the film of paint, which is rigid at the time in question since it is completely polymerised, to follow deformations of a certain magnitude in the sheet metal.

The object of the present invention is to provide a paint which can prevent the aforementioned problem.

This object is achieved by virtue of a paint of the type mentioned above, having additionally the features disclosed in the characterising portion of claim 1.

The paint according to the invention has the property that, once it has been applied to an item which is subsequently to be drawn, it reacts to a first application of heat and is partially polymerised.

For example, a temperature of about 80°C maintained for about 20 minutes causes polymerisation of between 10 and 30%.

The partially polymerised film has all the external characteristics of a fully dried paint and, furthermore, even withstands stresses due to the deep drawing of the item to which it is applied, without cracking, since its partial polymerisation affords it the necessary plasticity.

The paint film is then subjected to a second application of heat, for example, by the maintenance of a temperature or 80°C for about 20 minutes, so that the polymerisation is completed and the paint film attains the required coating properties and resistance to external agents.

The polimerisation reaction between the two components takes place in the presence of blocking agents and catalysts so that its rate can conveniently be regulated.

Of the agents which act on the isocyanate to block the reaction, phenols, alcohols, caprolactam, and ketamines may be mentioned, amongst others.

Of the catalysts of the cross-linking reaction, tertiary amines and metal salts such as dibutyltin dilaurate, dibutyltin acetate, zinc octoates and zinc naphthenates may be mentioned, amongst others.

The following non-limiting examples further illustrate the paint of the invention.

### EXAMPLE 1

The composition of the paint comprises the following components, whose amounts are expressed in parts by weight

| (p.w) | p.w. |
|---|---|
| - polyol (polyesteralcohol, obtained by reacting phtalic acid and hexahydrophtalic acid - whose ratio by weight is 1:2 with trimethylolpropane, having 8% by weight of hydroxil groups) | 40 |
| - isocyanate (triisocyanate-hexyl-biuret, obtained by reacting hexamethylene-diisocyanate with water in molar ratio 3:1) | 77 |
| - dibutyltin dilaurate | 57 |
| - sodium aluminosilicate | 4 |
| - butanol | 5 |
| - pigment (titanium dioxide) | 100 |

The ratio between the -NCO groups of the isocyanate and the -OH groups of the polyol is 0.9.

The paint has the following properties:

| | |
|---|---|
| - viscosity (of the mixture of polyol and isocyanate; using DIN cup. No. 4) | 68 sec. |
| - viscosity (of the finished paint; using DIN cup. No. 4) | 185 sec. |
| - length of each of the two polymerisation stages at 80°C | 20 min. |
| - pencil hardness | 1 H |
| - T-bend according to test No. 4 of European Coil Coating Association (project of 25/09/70) | 1-1,5 |
| - resistance to acetone | 5 min. |

### EXAMPLE 2

The composition of the paint comprises the following components, whose amounts are expressed in parts by weight

| (p.w.) | p.w. |
|---|---|
| - polyol (polyesteralcohol, obtained by reacting phtalic acid and hexahydrophtalic acid - whose ratio by weight is 1:2 with trimethylolpropane, having 8% by weight of hydroxil groups) | 45 |
| - sodium aluminosilicate | 4 |
| - isocyanate (triisocyanate-hexyl-biuret, obtained by reacting hexamethylene-diisocyanate with water in molar ratio 3:1) | 75 |
| - dibutyltin acetate | 53 |
| - butanol | 7 |
| - pigment (titanium dioxide) | 105 |

The ratio between the -NCO groups of the isocyanate and the -OH groups of the polyol is 0.8.

The paint has the following properties:

| | |
|---|---|
| - viscosity (of the mixture of polyol and isocyanate; using DIN cup. No. 4) | 57 sec. |
| - viscosity (of the finished paint; using DIN cup. No. 4) | 175 sec. |
| - length of each of the two polymerisation stages at 80°C | 20 min. |
| - pencil hardness | 1 H |
| - T-bend according to test No. 4 of European Coil Coating Association (project of 25/09/70) | 1-1,5 |
| - resistance to acetone | 5 min. |

## Claims

1. A two-component polyurethane paint, particularly for coating metal sheets which are to be cold drawn, the paint being formed as a result of the reaction between a first component containing -NCO groups and a second component containing -OH groups, characterised in that an isocyanate is used as the first component and a polyol is used as the second component and in that the ratio between the -NCO groups of the first component and the -OH groups of the second component is between 0.5 and 2.
